# EUROPEAN PATENT APPLICATION

(11) **EP 1 670 279 A1**
(43) Date of publication of application: **14.06.2006**
(21) Application number: 04292978.6
(22) Date of filing: 13.12.2004
(51) Int. Cl.: H04Q 11/00

(54) **Line-rate configuration method**

(71) Applicant: ALCATEL, 75008 Paris (FR)
(72) Inventor: Van Caenegem, Tom, 9820 Schelderode (BE); De Vos, Benoit, 1000 Brussels (BE)
(74) Representative: Narmon, Gisèle Marie Thérèse

(57) **Abstract**

A configuration method for use in an optical access network between a main station and a substation being coupled thereto is described. The configuration method comprises the steps of :
- predefining a plurality of upstream line-rates for use by the substation of one of these upstream line-rate for upstream transmission; and
- defining an association for each one of the plurality of upstream line-rates with each one of a plurality of predefined values; and
- inserting with an inserter of the main station one of the predefined values for a predefined number of bits at a predefined place of a predefined downstream message; and transmitting by the main station the downstream message; and
- defining in a memory of the substation the association between the plurality of upstream line-rates and the plurality of predefined values; and
- upon reception of the downstream message by the substation determining with a first determiner the value for the predefined number of bits at the predefined place of the predefined downstream message; and
- determining with a second determiner for the value and according to the association in the memory the one upstream line-rate; and
- configuring with a configurater the substation with the upstream line-rate for the upstream transmission.

## Description

The present invention relates to a configuration method for use by a substation and a main station and such a substation and main station.

Such a method, substation and main station are known in access networks such as e.g. Passive Optical Networks, shortly called hereafter PON networks. Such PON networks are designed according to multiple existing PON standards such as e.g. BPON, GPON, EPON.

It is known that in such a PON system the main station, hereafter also called the Optical Line Terminator, is always the reference for the protocol to be used, as well on Physical Medium Dependent level i.e. PMD level, as on PON Transmission Convergence TC layer level i.e. TC level.

In this way a substation can be designed to terminate one single PON protocol e.g. the BPON protocol or it is designed to cope with multiple PON protocols such BPON, EPON and GPON. This latter implementation comprises usually different chipsets whereof each chipset is enabled to function according to a protocol described in one of the different standards.

Furthermore, a typical characterization of a protocol during operation is the downstream and upstream bit-rate of the actual operative protocol. Indeed, identical protocols are defined to operate however with different predefined downstream line-rates in combination with different upstream line-rates. This means that a known substation that is coupled to a known main station in an optical access network is enabled to operate according to at least one of a plurality of predefined upstream line-rates-rates of a protocol.

As an example, the known Gigabit-capable Passive Optical Network transmission system allows several upstream and downstream line rates: 4 upstream line-rates and 2 downstream line-rates. However in a normal G-PON compliant system, only one combination upstream/downstream is active.

Since the main station, as the master in the system, decides the downstream and upstream line rates to be used, the operator has to make sure that a substation being coupled to the system and manufactured to support only one downstream, respectively, upstream line-rate, is the one that is used by the main station. For this reason, substations can be manufactured to support more than one downstream and/or upstream line-rate. However, again, the operator must make sure that the respective line-rates are set before the substation is activated. Indeed, when a new substation needs to be installed at a PON with an optical line terminator that functions according to a predefined downstream and upstream line-rate, one must take care that the new substation is designed to handle this predefined downstream and upstream line-rates. Furthermore, in the event when the substation is designed with the capability to function according to multiple line-rates, care must be taken that, at installation time, the right predefined line-rate is selected and activated. A technician that installs the substation usually does this.

Furthermore, in the event when the operator decides to change or to upgrade its main station towards a use of a different protocols, all substations that are coupled to the network of this line terminator should be either replaced or, in the event of supporting different types of protocols with different line-rates, should be manually tuned towards this different setting i.e. towards these other downstream and/or upstream line-rate. This is usually done by a technician or upon directions of the operator, by the user itself.

An object of the present invention is to provide a configuration method, for use in an optical access network and for execution by a main station and a substation being coupled thereto, according to the above known types, but whereby no manual intervention is required, at first installation time of the substation or at any later change of desired upstream line-rates, for the configuration of the substation to use one upstream line-rate out of a plurality of upstream line-rates.

According to the invention, this object is achieved due to the fact that the main station, the substation and the method comprises:
- defining an association for each one of the plurality of upstream line-rates with each one of a plurality of predefined values. This step has to be performed before installation time of the substation and the defined association is comprised in the substation at e.g. the time of manufacturing/programming/flashing which is reflected by a following step of:

- defining in a memory of the substation the association between the plurality of upstream line-rates and the plurality of predefined values. After these pre-definition steps are performed, and when the main station becomes operational in the field with its optical access network, a choice has to be made about the operational upstream and downstream bit-rate. Once the desired upstream bit-rate is decided, the above-mentioned respectively associated value to the desired bit-rate can be determined and a following step is performed by the main station:

- inserting with an inserter of the main station one of the predefined values for a predefined number of bits at a predefined place of a predefined downstream message; and transmitting by the main station the downstream message. It has to be remarked that the downstream message can be transmitted towards the different substations according to different ways. One possible implementation is e.g. downstream distribution of a message by the main station over its PON network towards all the substations being coupled via the PON to the main station.

In the event when a substation receives such a downstream message, it performs the following steps according to the present inventions :
- upon reception of the downstream message by the substation, determining with a first determiner the value for the predefined number of bits at the predefined place of the predefined downstream message; and
- determining with a second determiner for the value and according to the association in the memory the one upstream line-rate; and
- configuring with a configurater the substation with the upstream line-rate for the upstream transmission.

Once the downstream message is received and processed the substation passes to the states in which it the first time makes use of an upstream channel, according to the determined upstream line-rate, and then further on, it can participate to e.g. a ranging process.

The aim of the present invention is to allow an automatic selection by the substation of the desired upstream line-rate by conveying this required upstream line-rate by the main station in a downstream message of the main station. This is described in the configuration method of claim 1, the substation of claim 4 and the main station of claim 7.

It has to be remarked that this method, substation and main station of the present application is applied in the event when a new substation is connected to an existing Optical Access Network, but that they as well can be used in the event when the actual protocol that is operative on the Access Network between the main station an the different substations is tuned from one desired upstream bit-rate to another desired upstream bit-rate. With such an implementation, every substation according to the present invention that is coupled to the optical line terminator is enabled to execute again the steps of the method and to automatically determine the by the main station imposed upstream line-rate.

As already above mentioned, different optical access networks are known, whereof one group of optical access networks are defined by the Passive Optical Network standards. One subgroup of PON standard is defined by Gigabit-capable Passive Optical Networks, shortly called G-PON, series. Furthermore, the application of the GPON protocol can be performed according to different line-rates:
- GPON protocol with 1244 Mbit/s downstream line-rate and 1244 Mbit/s upstream line-rate; and
- GPON protocol with 1244 Mbit/s downstream line-rate and 622 Mbit/s upstream line-rate; and
- GPON protocol with 1244 Mbit/s downstream line-rate and 155 Mbit/s upstream line-rate; and
- GPON protocol with 2488 Mbit/s downstream line-rate and 155 Mbit/s upstream line-rate; and
- GPON protocol with 2488 Mbit/s downstream line-rate and 622 Mbit/s upstream line-rate; and
- GPON protocol with 2488 Mbit/s downstream line-rate and 1244 Mbit/s upstream line-rate.
- GPON protocol with 2488 Mbit/s downstream line-rate and 2488 Mbit/s upstream line-rate.

In order to avoid, manually tuning of the prior art substations towards the different setting i.e. towards the desired upstream line-rate being one of the above-defined upstream line-rates, the method of the present invention can be applied in the GPON network. This means that an implementation of the present invention is that the optical access network that comprises a main station according to the present invention and a substation according to the present invention and wherein the method of the invention is executed is a Gigabit - capable Passive Optical Network (GPON). This is described in the configuration method of claim 2, the substation of claim 5 and the main station of claim 8.

A known downstream message of the GPON standard is described in G.984.3 at paragraph 9.1 that describes the Physical Layer Operation and Maintenance Message format and more in detail in *paragraph* 9.2.3.1 that describes the Upstream-Overhead message.

Since, this downstream message is called "Upstream-Overhead message". Since this "Upstream-Overhead PLOAM message" is sent out regularly by the main station to allow the new substations to receive important information that is needed when accessing the upstream channel, it makes this message very convenient to implement the downstream message of the present invention. Indeed, only after reception to this message the substation is allowed to pass to the states in which it the first time makes use of the upstream channel, and then further on, participates to the ranging process. However, the actual know message as it is defined in paragraph 9.2.3.1 does not allow the substation to deduce the desired upstream line-rate.

According to the method of claim 3, the substation of claim 6 and the main station of claim 9, in this downstream message called "Upstream-Overhead message", the two first, still reserved bits of the 10^{th} octet are used to insert the predefined value being associated to the desired upstream line-rate. Herewith the predefined downstream message is a message according to the Gigabit-capable Passive Optical Network ITU-T standard, called Upstream-Overhead message and whereby the predefined number of bits is a two-bit word at a predefined place being a reserved place of an octet of this message.

It is to be noticed that the term 'comprising', used in the claims, should not be interpreted as being limitative to the means listed thereafter. Thus, the scope of the expression 'a device comprising means A and B' should not be limited to devices consisting only of components A and B. It means that with respect to the present invention, the only relevant components of the device are A and B.

Similarly, it is to be noticed that the term 'coupled', also used in the claims, should not be interpreted as being limitative to direct connections only. Thus, the scope of the expression 'a device A coupled to a device B' should not be limited to devices or systems wherein an output of device A is directly connected to an input of device B. It means that there exists a path between an output of A and an input of B which may be a path including other devices or means.

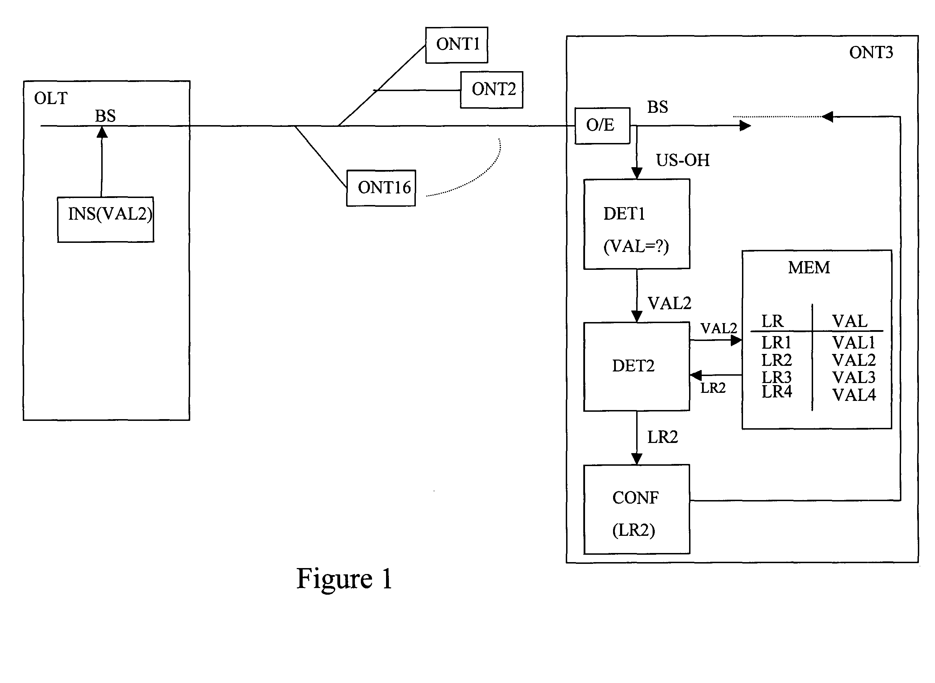

The above and other objects and features of the invention will become more apparent and the invention itself will be best understood by referring to the following description of an embodiment taken in conjunction with the accompanying drawing wherein Figure 1 represents an optical access network in a telecommunication system.

The optical network is a GPON passive optical access network that is preferred here as an example to explain the basic idea of the present invention.

Referring to this figure 1, the passive optical network, called hereafter shortly GPON network, is an optical access network with a tree-like structure. A main station OLT is coupled to a common branch of this PON network. Different sub-stations are coupled to different individual branches of the PON network. Furthermore, Figure 1 shows as a matter of an example, four sub-stations ONT1, ONT2, ONT3 and ONT16 i.e. substations that are each coupled to an individual branch of the PON network. In order not to complicate Figure 1, only for optical network terminator ONT3 the different functional blocks related to the main aspects of the present invention are shown.

The working of this substation ONT3 and the main station OLT, according to the present invention in accordance with its telecommunication environment that is shown in Figure 1, will be explained by means of a functional description of the different blocks shown therein. Based on this description, the practical implementation of the blocks will be obvious to a person skilled in the art and will therefor not be described in details. In addition, the principle working of the configuration method will be described in further detail.

The main station OLT comprises an inserter INS.

The substation ONT3 comprises an optical / electrical converter O/E being coupled to an input. The converter O/E is coupled to a first determiner DET1 that is coupled on its turn to a second determiner DET2. The second determiner DET2 is coupled to a memory MEM and to a configurator CONF. The configurator CONF is on its turn coupled via known functional blocks (not shown) that take care of upstream information packets, to an output of the substation ONT3.

A vendor may choose to have logic inside its substations such that it supports multiple optical access protocols with corresponding differentiated optical access - optical unit driver firmware. For instances a GPON protocol includes the Transmission Convergence part as well as Physical Medium Dependent (PMD) part. The PMD refers to the line rate in upstream and downstream direction, and to the line coding, burst overhead, etc ...

Presume that the substation ONT3 is enabled to operate according to anyone of the hereafter listed GPON protocol with its respective line-rates :
- GPON protocol with 1244 Mbit/s downstream line-rate and 1244 Mbit/s upstream line-rate; and
- GPON protocol with 1244 Mbit/s downstream line-rate and 622 Mbit/s upstream line-rate; and
- GPON protocol with 1244 Mbit/s downstream line-rate and 155 Mbit/s upstream line-rate; and
- GPON protocol with 2488 Mbit/s downstream line-rate and 155 Mbit/s upstream line-rate; and
- GPON protocol with 2488 Mbit/s downstream line-rate and 622 Mbit/s upstream line-rate; and
- GPON protocol with 2488 Mbit/s downstream line-rate and 1244 Mbit/s upstream line-rate.
- GPON protocol with 2488 Mbit/s downstream line-rate and 2488 Mbit/s upstream line-rate.

It has to be remarked that the provided values of the upstream line-rates might substantially differ and that the exact value of a downstream line-rate goes beyond the aim of the present invention.

The present invention refers to the additional capability and interworking of a main station OLT and a substation ONT3 to automatically detect what upstream line-rates is desired by the main station. Such a capability may impact both the circuitry of PMD and the TC subparts of the main station and the substation. This will now be described in further details.

A first step to be executed is the definition of an association for each one of the plurality of upstream line-rates being defined as follows LR1=155 Mbit/sec; LR2=622 Mbit/sec; LR3=1244 Mbit/sec; LR4=Mbit/sec; with each one of a plurality of predefined values being defined as follows VAL1; VAL2; VAL3; VAL4.

A possible implementation is the following association:
Xx = 00 <=> VAL1 <=> US line rate = 155 Mb/s
Xx = 01 <=> VAL2 <=> US line rate = 622 Mb/s
Xx = 10 <=> VAL3 <=> US line rate = 1244 Mb/s
Xx = 11 <=> VAL4 <=> US line rate = 2488 Mb/s

The predefined association is also stored in the memory MEM of the substation ONT3. This is shown in Figure 1. The storing of the "knowledge of the global association for the different values with different bit-rates", as shown in the table above, might be performed at different time moments e.g. at time of manufacturing/programming of the substation; or the association is imposed just before delivery of a sold substation by means of setting a plurality of switches that enable to store different kinds of "global associations" e.g. one global association for the GPON series and one global association for the BPON series, etc. The aim of the present invention is that once the substation is coupled to the GPON network, no manual operation is needed anymore to adapt it to an actual desired upstream line-rate. However, a manual intervention might still be possible to obtain other requirements, which goes however beyond the aim of the present invention.

Once the system becomes operative it is decided with which kind of upstream line-rate the GPON has to work. Presume that the desired upstream line-rate is: US line rate = 622 Mb/s. As it was defined, the corresponding defined value is VAL2 <=> 01.

A following step to be executed is the insertion by means of the inserter INS of the main station OLT of this VAL2 <=> 01 for a predefined number of bits at a predefined place of a predefined downstream message.

As described above, a preferred implementation here is the insertion into the "Upstream-Overhead message" at the place of the two first bit of the 10^{th} octet. Since these places are still reserved places i.e. no meaning is associated to them yet, and since the downstream message is distributed into the PON network anyway, these two bits can as well be used to insert the predefined value that is associated to the desired upstream line-rate.

So, according to an aspect of the present invention, a meaning is provided to these two bits of the G-PON Usptream-Overhead message, whereby the main station is taking advantage of this meaning and hereby enables the substation to automatically pick up the value and configure itself according to the associated bit-rate for its upstream transmission and communication with the main station.

Once the substation ONT3 is coupled to main station OLT, the optical/electrical converter converts the received optical signal into an electrical signal. It has to be remarked that, not only when the substation is connected for the first time to the main station OLT but also when the main station OLT is changing is actual used type of protocol, the following described method is executed by the substation ONT3 to change its configured upstream line-rate for operation and communication with the main station OLT. The electrical signal, called bit-stream, is forwarded to a first determiner DET1.

A following step has to be executed by the substation ONT3 now. Upon reception of the downstream message by the substation ONT3, it determines with the first determiner DET1 the value VAL=VAL2 for the predefined number of bits at the predefined place of the predefined downstream message. Hereafter a possible implementation of the determination of the value by the first determiner DET1 is described shortly, however, the related functional blocks are not shown in Figure 1.

Firstly a bit-rate and a line-coding for the bit-stream BS being received from the main station OLT is determined. Hereby a downstream line-rate and a downstream line-coding (not shown) is determined. This downstream line-rate and a downstream line-coding is provided to an interpreter (not shown) to interpret, based upon the downstream line-rate and the downstream bit-rate, the bit-stream and to provide thereby an interpreted bit-stream. The interpreted bit-stream is provided to e.g. a selector (not shown) that selects, based upon at least anyone of the downstream line-rate, the downstream line-coding and the interpreted bit-stream, and according to predefined rules and conditions, a type e.g. TYP3 out of a plurality of predefined types of protocol (TYP1; TYP2; TYP3; TYP4; ...) for the bit-stream. The predefined rules and condition are based upon one or more distinguishing marks between the plurality of predefined types of protocol (TYP1; TYP2; TYP3; TYP4; ...). This means that the substation ONT3 tries to lock on i.e. to get synchronized with a pattern or a frame that is specific for a Transmission Convergence layer of each of the protocols it supports.

One of such distinguishing marks is implemented by the recognition of firstly, a downstream PLOAM message format, and secondly, based upon a predefined message identification within the PLOAM message, the recognition of a "Upstream-Overhead message", and thirdly by counting the octets the two reserved bits of the 10th octet are determined as the predefined number of bits at a predefined place of a predefined downstream message.

The value of these two bits are determined i.e. VAL2 <==> 01 and is provided to a following functional block i.e. a second determiner DET2 of the substation ONT3. The second determiner DET2 determines for the value VAL2 and according to the stored association (VAL2 / LR2) in the memory MEM an upstream line-rate i.e. LR2 = 622 Mbit/ sec according to the present example.

Finally, the configurater CONF configures the substation ONT3 with the upstream line-rate LR2 = 622 Mbit/sec. for the future upstream transmission.

An advantage of the present application is that a PON ONT vendor can focus on fabrication of one single PON ONT unit that supports e.g. BPON, GPON, and EPON at the same time. The installation of such an ONT that can automatically detect the desired upstream line-rate, is plug and play, which is favorable both for the customer or operator. When an operator wants to change the OLT that uses a different protocol with a different upstream line-rate, the ONTs are kept in place and no manual intervention is required from the operator or from the customer.

So, by connecting the ONT equipped with the described capability, consecutively with a first OLT and a second OLT that are using different protocols with different upstream line-rates e.g. EPON and GPON, the ONT is capable, without any manual intervention, to get ranged by both OLTs and become operational.

It has to be remarked that actual known procedures such as a synchronization procedure of one or another known type of protocol can be reused to implement part of the predefined rules and conditions being based upon distinguishing marks of the type of protocol. However, the required functionality of the final selection itself among the different types of protocol will have to be added.

A final remark is that embodiments of the present invention are described above in terms of functional blocks. From the functional description of these blocks, given above, it will be apparent for a person skilled in the art of designing electronic devices how embodiments of these blocks can be manufactured with well-known electronic components. A detailed architecture of the contents of the functional blocks hence is not given.

While the principles of the invention have been described above in connection with specific apparatus, it is to be clearly understood that this description is made only by way of example and not as a limitation on the scope of the invention, as defined in the appended claims.

## Claims

1. A configuration method for use in an optical access network between a main station (OLT) and a substation (ONT3) being coupled thereto, said configuration method comprises a step of
predefining a plurality of predefined upstream line-rates (LR1; LR2; LR3; LR4) for use by said substation (ONT3) of one upstream line-rate out of said plurality of upstream line-rates (LR1; LR2; LR3; LR4) for upstream transmission, **characterized in that** said configuration method further comprises the steps of
- defining an association for each one of said plurality of upstream line-rates (LR1; LR2; LR3; LR4) with each one of a plurality of predefined values (VAL1 (LR1); VAL2(LR2); VAL3(LR3); VAL4(LR4)); and
- inserting with an inserter (INS) of said main station (OLT) one (VAL2) of said predefined values for a predefined number of bits at a predefined place of a predefined downstream message; and transmitting by said main station (OLT) said downstream message; and
- defining in a memory (MEM) of said substation (ONT3) said association between said plurality of upstream line-rates (LR1; LR2; LR3; LR4) and said plurality of predefined values (VAL1(LR1); VAL2(LR2); VAL3(LR3); VAL4(LR4)); and
- upon reception of said downstream message by said substation (ONT3), determining with a first determiner (DET1) said value (VAL=VAL2) for said predefined number of bits at said predefined place of said predefined downstream message; and
- determining with a second determiner (DET2) for said value (VAL2) and according to said association (VAL2; LR2) in said memory (MEM) said one upstream line-rate (LR2); and
- configuring with a configurater (CONF) said substation (ONT3) with said upstream line-rate (LR2) for said upstream transmission.

2. The configuration method of claim 1 whereby said optical access network is a Gigabit - capable Passive Optical Network (GPON).

3. The configuration method of claim 2 whereby said predefined downstream message (US-OH) is a message according to the Gigabit-capable Passive Optical Network ITU-T standard, called Upstream-Overhead message and whereby said predefined number of bits is a two-bit word at a predefined place being a reserved place of an octet of said message.

4. A substation (ONT3) for coupling to a main station (OLT) in an optical access network and for execution of a configuration method for use of one upstream line-rate out of a plurality of predefined upstream line-rates (LR1; LR2; LR3; LR4), **characterized in that** said substation (ONT3) comprises:
- a memory (MEM) to store an association between each one of said plurality of upstream line-rates (LR1; LR2; LR3; LR4) with each one of a plurality of predefined values (VAL1(LR1); VAL2(LR2); VAL3(LR3); VAL4(LR4)); and
- a first determiner (DET1) to determine, upon reception of a predefined downstream message by said substation (ONT3) from said main station (OLT), one (VAL=VAL2) of said plurality of predefined values, for a predefined number of bits at a predefined place of said predefined downstream message, said predefined value (VAL2) being inserted by said main station (OLT) for said predefined number of bits at said predefined place of said predefined downstream message; and
- a second determiner (DET2) to determine for said value (VAL2) and according to said association (VAL2; LR2) in said memory (MEM) said one upstream line-rate (LR2); and
- a configurater (CONF) to configure said substation (ONT3) with said upstream line-rate (LR2) for said upstream transmission.

5. The substation (ONT3) according to claim 4, **characterized in that** said optical access network is a Gigabit - capable Passive Optical Network (GPON).

6. the substation (ONT3) according to claim 5, **characterized in that** said predefined downstream message (US-OH) is a message according to the Gigabit-capable Passive Optical Network ITU-T standard, called Upstream-Overhead message, and whereby said predefined number of bits is a two-bit word at a predefined place being a reserved place of an octet of said message.

7. A main station (OLT) for coupling to a substation (ONT3) in an optical access network and for execution of a configuration method for use of one upstream line-rate out of a plurality of predefined upstream line-rates (LR1; LR2; LR3; LR4) by said substation (ONT3), **characterized in that** said main station (OLT) comprises an inserter (INS) to insert one (VAL2) of a plurality of predefined values for a predefined number of bits at a predefined place of a predefined downstream message; and that said main station (OLT) is adapted to transmit said downstream message to said substation (ONT3), each one of said plurality of predefined values (VAL1(LR1); VAL2(LR2); VAL3(LR3); VAL4(LR4)) being associated with each one of said plurality of upstream line-rates (LR1; LR2; LR3; LR4) in order to thereby impose said one upstream line-rate (LR2) being associated to said inserted predefined value(VAL2) upon said substation (ONT3) for upstream transmission.

8. The main station (OLT) according to claim 7, **characterized in that** said optical access network is a Gigabit - capable Passive Optical Network (GPON).

9. The main station (OLT) according to claim 8, **characterized in that** said predefined downstream message (US-OH) is a message according to the Gigabit-capable Passive Optical Network ITU-T standard, called Upstream-Overhead message and whereby said predefined number of bits is a two-bit word at a predefined place being a reserved place of an octet of said message.
